(19)

Europäisches Patentamt
European Patent Office
Office européen des brevets

(11) **EP 3 506 539 A1**

(12) **EUROPEAN PATENT APPLICATION**

(43) Date of publication:
**03.07.2019 Bulletin 2019/27**

(51) Int Cl.:
**H04L 1/00** (2006.01)  **H04L 1/06** (2006.01)
**H04B 7/06** (2006.01)

(21) Application number: **18188132.7**

(22) Date of filing: **10.01.2007**

(84) Designated Contracting States:
**AT BE BG CH CY CZ DE DK EE ES FI FR GB GR HU IE IS IT LI LT LU LV MC NL PL PT RO SE SI SK TR**

(30) Priority: **11.01.2006 US 758034 P**

(62) Document number(s) of the earlier application(s) in accordance with Art. 76 EPC:
**16165127.8 / 3 059 890**
**07717949.7 / 1 989 806**

(71) Applicant: **InterDigital Technology Corporation Wilmington, DE 19809-3727 (US)**

(72) Inventors:
• **Olesen, Robert L.**
  **Huntington, NY 11743 (US)**
• **Zeira, Eldad**
  **Huntington, NY 11743 (US)**
• **Voltz, Peter J.**
  **Commack, NY 11725 (US)**

• **Yang, Yongwen**
  **Hillsborough, NJ 08844 (US)**
• **Dai, Qingyuan**
  **Germantown, MD 20874 (US)**
• **Chang-Soo, Koo**
  **Melville, NY 11747 (US)**
• **Lu, I-Tai**
  **Dix Hills, NY 11746 (US)**
• **Tsai, KunJun**
  **350 Miaoli Chunan (TW)**

(74) Representative: **AWA Sweden AB**
  **P.O. Box 5117**
  **200 71 Malmö (SE)**

Remarks:
•This application was filed on 09.08.2018 as a divisional application to the application mentioned under INID code 62.
•Claims filed after the date of receipt of the divisional application (Rule 68(4) EPC).

(54) **METHOD AND APPARATUS FOR IMPLEMENTING SPACE TIME PROCESSING WITH UNEQUAL MODULATION AND CODING SCHEMES**

(57)     A method and apparatus for implementing spatial processing with unequal modulation and coding schemes (MCSs) or stream-dependent MCSs are disclosed. Input data may be parsed into a plurality of data streams, and spatial processing is performed on the data streams to generate a plurality of spatial streams. An MCS for each data stream is selected independently. The spatial streams are transmitted via multiple transmit antennas. At least one of the techniques of space time block coding (STBC), space frequency block coding (SFBC), quasi-orthogonal Alamouti coding, time reversed space time block coding, linear spatial processing and cyclic delay diversity (CDD) may be performed on the data/spatial streams. An antennal mapping matrix may then be applied to the spatial streams. The spatial streams are transmitted via multiple transmit antennas. The MCS for each data stream may be determined based on a signal-to-noise ratio of each spatial stream associated with the data stream.

FIG. 1

**Description**

FIELD OF INVENTION

The present invention is related to wireless communication systems. More particularly, the present invention is related to a method and apparatus for implementing spatial processing with unequal modulation and coding schemes (MCSs).

BACKGROUND

The IEEE 802.11n joint proposal group currently proposes using a hybrid space-time block code (STBC) and spatial division multiplexing (SDM) scheme for the next generation of high performance wireless networks. This hybrid STBC/SDM scheme results in unbalanced quality of service for data streams which translates into lower residual signal-to-noise ratio (SNR) at the output of a receiver. In conventional systems, equal MCSs are applied to all spatial streams. However, this results in a loss of benefits of the diversity gain for the spatial stream carried by STBC precoding.

Therefore, it would be desirable to provide a method and apparatus for applying unequal MCSs or stream-dependent MCSs while performing spatial processing, such as STBC.

SUMMARY

The present invention is related to a method and apparatus for implementing spatial processing with unequal MCSs or stream-dependent MCSs. Input data may be parsed into a plurality of data streams, and spatial processing is performed on the data streams to generate a plurality of spatial streams. An MCS for each data stream is selected independently. The spatial streams are then transmitted via multiple transmit antennas. At least one of the techniques of STBC, space frequency block coding (SFBC), quasi-orthogonal Alamouti coding, time reversed space time block coding, linear spatial processing and cyclic delay diversity (CDD) may be performed on the data/spatial streams. An antenna mapping matrix may then be applied to the spatial streams. The resulted spatial streams are then transmitted via multiple transmit antennas. The MCS for each data stream may be determined based on an SNR of each spatial stream associated with the data stream.

BRIEF DESCRIPTION OF THE DRAWINGS

A more detailed understanding of the invention may be had from the following description of a preferred embodiment, given by way of example and to be understood in conjunction with the accompanying drawings wherein:

Figure 1 is a block diagram of a transmitter configured in accordance with the present invention;
Figure 2 is a block diagram of a receiver configured in accordance with the present invention;
Figure 3 is a block diagram of an exemplary spatial processing unit configured to perform STBC and/or linear spatial mapping; and
Figures 4 and 5 show simulation results for IEEE 802.11n channels E and B using a $3\times2$ antenna configuration and a linear minimum mean square error (LMMSE) receiver.

DETAILED DESCRIPTION OF THE PREFERRED EMBODIMENTS

In accordance with the present invention, unequal MCSs or stream-dependent MCSs are applied to different spatial streams. The present invention may be applied in an orthogonal frequency division multiplexing (OFDM)-multiple-input multiple-output (MIMO) system, a multi-carrier code division multiple access (MC-CDMA) system, a CDMA system, or the like. Unequal MCSs are applied in different data streams to take advantage of unequal SNRs for different data streams. For example, a higher order MCS may be applied to a spatial stream which has diversity coding and a lower order MCS to a spatial stream that does not have diversity coding to reduce the total self induced interference. With unequal MCSs, or stream-dependent MCSs, a simpler receiver algorithm, (e.g., linear minimum mean square error (LMMSE)), may be used due to the reduced self interference.

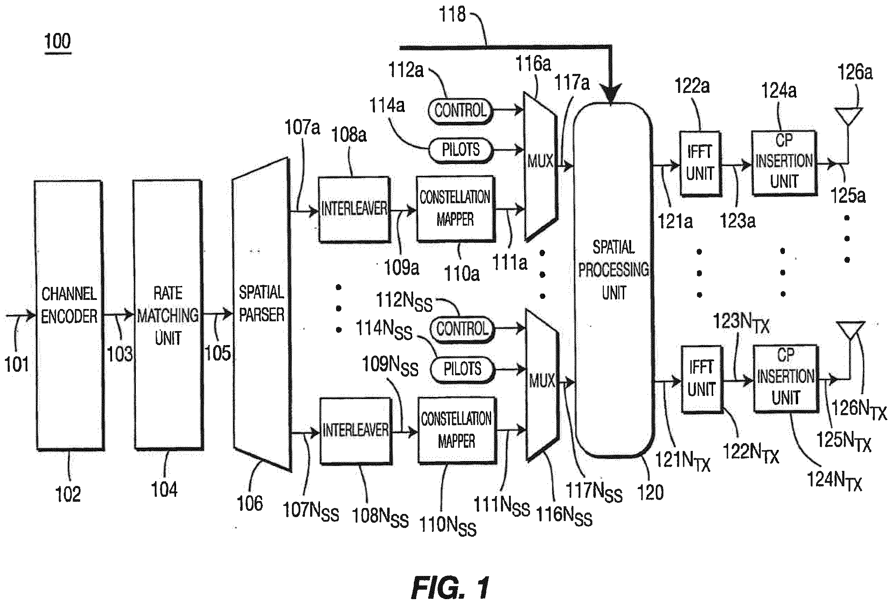

Figure 1 is a block diagram of a transmitter 100 configured in accordance with the present invention. The transmitter 100 includes a channel encoder 102, a rate matching unit 104, a spatial parser 106, a plurality of interleavers 108a-108$n_{ss}$, a plurality of constellation mappers 110a-110$n_{ss}$, a plurality of multiplexers 116a-116$n_{ss}$, a spatial processing unit 120, a plurality of inverse fast Fourier transform (IFFT) units 122a-122$n_{tx}$, a plurality of cyclic prefix (CP) insertion units 124a-124$n_{tx}$ and a plurality of transmit antennas 126a-126$n_{tx}$. It should be noted that the configuration shown in Figure 1 is provided as an example, not as a limitation, and the processing performed by the components may be implemented by more or less components and the order of processing may be changed.

The channel encoder 102 encodes input data 101. Adaptive modulation and coding (AMC) is used and any coding rate and any coding scheme may be used. For example, the coding rate may be ½, 1/3, 1/5, ¾, or the like. The coding scheme may be Turbo coding, convolutional coding, block coding, low density parity check (LDPC) coding, or the like. The encoded data 103 may be punctured by the rate matching unit 104.

The encoded data after rate matching 105 is parsed into a plurality of (Nss) spatial streams $107a-107n_{ss}$ by the spatial parser 106. Data bits on each data stream $107a-107n_{ss}$ are preferably interleaved by the interleaver $108a-108n_{ss}$. The data bits after interleaving $109a-109n_{ss}$ are then mapped to symbols $111a-111n_{ss}$ by the constellation mappers $110a-110n_{ss}$ in accordance with a selected modulation scheme. The modulation scheme may be Quadrature phase shift keying (QPSK), 8PSK, 16 Quadrature amplitude modulation (QAM), 64 QAM, or the like. Control data $112a-112n_{ss}$ and/or pilots $114a-114n_{ss}$ are multiplexed with symbols $111a-111n_{ss}$ by the multiplexer $116a-116n_{ss}$. The symbols $117a-117n_{ss}$ (including the multiplexed control data $112a-112n_{ss}$ and/or pilots $114a-114n_{ss}$) are processed by the spatial processing unit 120.

Alternatively, the input data 101 may be split prior to channel encoding and the split multiple input data may be encoded by two or more separate encoders. Alternatively, instead of, or in addition to, parsing one data stream into multiple data streams, several input data streams that may belong to one or more users may be processed to be transmitted via several spatial streams.

The spatial processing unit 120 selectively performs spatial processing on the symbols $117a-117n_{ss}$ based on channel state information 118 and outputs $N_{TX}$ data streams $121a-121n_{tx}$. The spatial processing may be space time coding (STC), spatial multiplexing (SM), linear spatial mapping, or transmit beamforming. For STC, any form of STC may be used including STBC, SFBC, quasi-orthogonal Alamouti for four (4) transmit antennas, time reversed STBC (TR-STBC), CDD, or the like.

The channel state information 118 may be at least one of a V matrix for every sub-carrier, an SNR, a channel matrix rank, a channel condition number, delay spread, or short and/or long term channel statistics. The V matrix is an unitary matrix obtained from the singular value decomposition (SVD) of the estimated channel matrix. The channel condition number is related to the rank of the channel matrix. An ill-conditioned channel may be rank deficient. A low rank, or ill-conditioned channel would exhibit better robustness using a diversity scheme such as STBC since the channel would not have sufficient degree of freedom to support SM with transmit beamforming. A high rank channel would support higher data rates using SM with transmit beamforming. The channel state information 118 may be obtained using conventional techniques, such as direct channel feedback (DCFB).

The data streams $121a-121n_{tx}$ from the spatial processing unit 120 are processed by the IFFT units $122a-122n_{tx}$ which output time domain data 123a-123ntx. A CP is added to each of the time domain data $123a-123n_{tx}$ by the CP insertion unit $124a-124n_{tx}$. The time domain data with CP $125a-125n_{tx}$ is then transmitted via the transmit antennas $126a-126n_{tx}$.

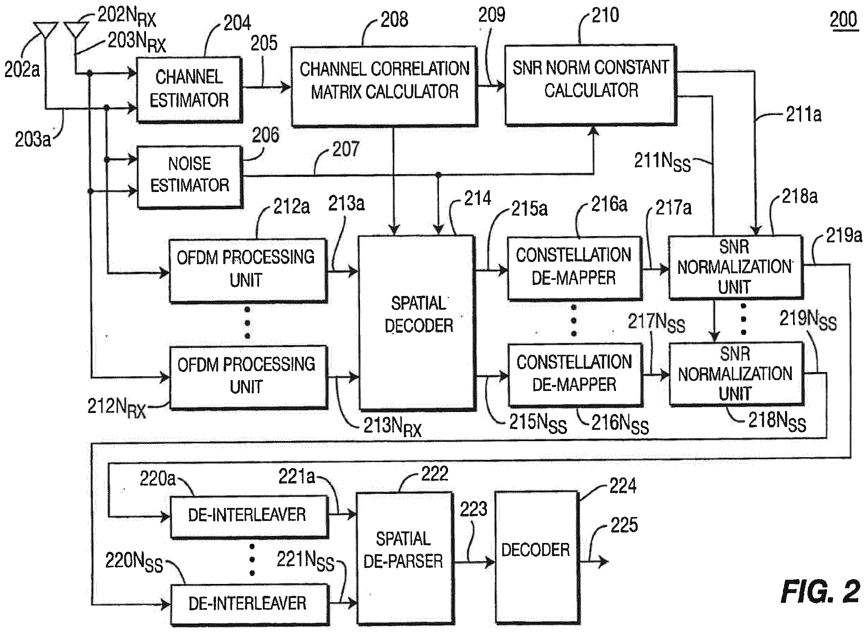

Figure 2 is a block diagram of a receiver 200 configured in accordance with the present invention. The receiver 200 comprises a plurality of receive antennas $202a-202n_{rx}$, a channel estimator 204, a noise estimator 206, a channel correlation matrix calculator 208, an SNR norm constant calculator 210, a plurality of OFDM processing units $212a-212n_{rx}$, a spatial decoder 214, a plurality of constellation de-mappers $216a-216n_{ss}$, a plurality of SNR normalization units $218a-218n_{ss}$, a plurality of de-interleavers $220a-220n_{ss}$, a spatial de-parser 222 and a decoder 224. It should be noted that the configuration shown in Figure 2 is provided as an example, not as a limitation, and the processing performed by the components may be implemented by more or less components and the order of processing may be changed.

A plurality of received data streams $203a-203n_{rx}$ are input into the channel estimator 204, the noise estimator 206 and the OFDM processing units $212a-212n_{rx}$. The channel estimator 204 performs channel estimate to generate a channel matrix 205 using a conventional method. The noise estimator 206 calculates a noise variance 207. The channel correlation matrix calculator 208 generates a correlation matrix 209 from the channel matrix 205, which will be explained in detail hereinafter. The SNR norm constant calculator 210 calculates SNR norm constants $211a-211n_{ss}$ from the correlation matrix 209 and the noise variance 207, which will be explained in detail hereinafter.

Each of the OFDM processing unit $212a-212n_{rx}$ removes a CP from each received data stream $203a-203n_{rx}$ and performs a fast Fourier transform (FFT) to output frequency domain data $213a-213n_{rx}$. The outputs $213a-213n_{rx}$ from the OFDM processing units $212a-212n_{rx}$ are processed by the spatial decoder 214. The spatial decoder 214 may be a minimum mean square error (MMSE) decoder, an MMSE-successive interference cancellation (SIC) decoder or a maximum likelihood (ML) decoder.

After spatial decoding, the decoded data $215a-215n_{ss}$ is processed by the constellation de-mappers $216a-216n_{ss}$ to generate bit streams $217a-217n_{ss}$. The bit streams $217a-217n_{ss}$ are normalized by the SNR normalization units $218a-218n_{ss}$ based on the SNR norm constants $211a-211n_{ss}$. The normalized bits streams $219a-219n_{ss}$ are then processed by the de-interleavers $220a-220n_{ss}$. The de-interleaved bits $221a-221n_{ss}$ are merged into one bit stream 223 by the spatial de-parser 222. The bit stream 223 is then processed by the decoder 224 to recover the input data 225.

Hereinafter, spatial processing at the transmitter 100 and the receiver 200 will be explained with reference to STBC as a representative example. The following definitions will be used:

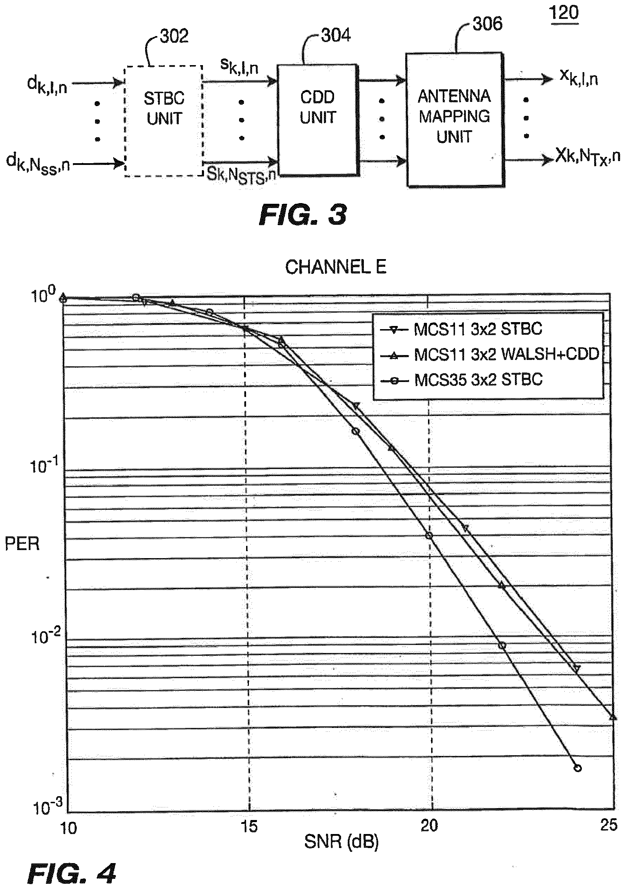

$N_{TX}$: the number of transmit antennas;
$N_{SS}$: the number of spatial streams;
$N_{STS}$: the number of streams after STBC;
$d_{k,n}$: a data vector at symbol time $n$;
$s_{k,n}$: a vector after STBC at symbol time $n$;
$x_{k,n}$: a vector after **P** matrix in Figure 3 at symbol time $n$; and
$y_{k,n}$: a received vector at symbol time $n$.

Figure 3 is a block diagram of an exemplary spatial processing unit 120 configured to perform STBC and/or linear spatial mapping. The spatial processing unit 120 may include an STBC unit 302, a CDD unit 304 and an antenna mapping unit 306. Each of the symbols 117a-117n$_{ss}$ is a stream of complex numbers. A complex symbol transmitted on a spatial stream $i$ of a subcarrier $k$ of an OFDM symbol $n$ is denoted by $d_{k,i,n}$. The STBC unit 302 processes two sequential OFDM symbols in each subcarrier. The output symbols from the STBC unit 302 on an output space-time stream $i_{STS}$ on a subcarrier $k$ on OFDM symbols $2m$ and $2m+1$ are given by:

$$s_{k,i_{STS},2m} = f_{0,i_{STS}}\left(d_{k,i_{SS},2m}, d_{k,i_{SS},2m+1}\right)$$
$$s_{k,i_{STS},2m+1} = f_{1,i_{STS}}\left(d_{k,i_{SS},2m}, d_{k,i_{SS},2m+1}\right), \qquad \text{Equation (1)}$$

where $f_{0,i_{STS}}$ and $f_{1,i_{STS}}$ are defined in Table 1.

Table 1

| $N_{STS}$ | $N_{SS}$ | $i_{STS}$ | $f_{0,i_{STS}}$ | $f_{1,i_{STS}}$ |
|---|---|---|---|---|
| 2 | 1 | 1 | $d_{k,1,2m}$ | $d_{k,1,2m+1}$ |
| | | 2 | $-d^*_{k,1,2m+1}$ | $d^*_{k,1,2m}$ |
| 3 | 2 | 1 | $d_{k,1,2m}$ | $d_{k,1,2m+1}$ |
| | | 2 | $-d^*_{k,1,2m+1}$ | $d^*_{k,1,2m}$ |
| | | 3 | $d_{k,2,2m}$ | $d_{k,2,2m+1}$ |
| 4 | 2 | 1 | $d_{k,1,2m}$ | $d_{k,1,2m+1}$ |
| | | 2 | $-d^*_{k,1,2m+1}$ | $d^*_{k,1,2m}$ |
| | | 3 | $d_{k,2,2m}$ | $d_{k,2,2m+1}$ |
| | | 4 | $-d^*_{k,2,2m+1}$ | $d^*_{k,2,2m}$ |
| | 3 | 1 | $d_{k,1,2m}$ | $d_{k,1,2m+1}$ |
| | | 2 | $-d^*_{k,1,2m+1}$ | $d^*_{k,1,2m}$ |
| | | 3 | $d_{k,2,2m}$ | $d_{k,2,2m+1}$ |
| | | 4 | $d_{k,3,2m}$ | $d_{k,3,2m+1}$ |

Linear spatial processing may be performed by the CDD unit 304 and the antenna mapping unit 306 on the output symbols from the STBC unit 302. If STBC is not performed, $s_{k,i,n} = d_{k,i,n}$ and $N_{STS}=N_{SS}$. Linear spatial processing is defined as a sequence of rotations of the vector of symbols that is to be transmitted in a given subcarrier. The processing by the CDD unit 304 and the antenna mapping unit 306 are expressed as follows:

$$\mathbf{x}_{k,n} = \left[ \mathbf{P}_{\text{map}}(k) \right]_{N_{STS}} \mathbf{C}_{\text{CDD}}(k) \mathbf{s}_{k,n} ,$$

Equation (2)

where $\mathbf{s}_{k,n} = [s_{k,l,n} \ldots s_{k,N_{STS},n}]^T$ is an $N_{STS}$-vector of modulation symbols to be transmitted on a subcarrier $k$ of an OFDM symbol $n$. $\mathbf{C}_{\text{CDD}}(k)$ is an $N_{SS} \times N_{SS}$ diagonal cyclic delay matrix which represents the cyclic delay in the frequency domain. The diagonal values are given by $\left[ \mathbf{C}_{\text{CDD}}(k) \right]_{i,i} = \exp\left( -j 2\pi k \Delta_F T_{CS}^i \right)$ . $[\mathbf{P}_{\text{map}}(k)]_{N_{STS}}$ is an $N_{Tx} \times N_{STS}$ matrix comprising the first $N_{STS}$ columns of the $N_{TX} \times N_{TX}$ unitary antenna mapping matrix $\mathbf{P}_{\text{map}}(k)$. This may be an identity matrix for direct-mapped operation, a mapping matrix for spatial spreading operation, or a channel-specific steering matrix such as a set of channel eigenvectors. $\mathbf{x}_{k,n}$ is an $N_{TX}$-vector of transmitted symbols in a subcarrier $k$ of an OFDM symbol $n$.

A channel matrix $H_{eff}$ is an effective channel seen by the vector $s_{k,n}$ so that:

$$y_{k,n} = H_{eff} \, s_{k,n} + n_{k,n} .$$

Equation (3)

In the receiver, $y_{k,2m}$ and $y_{k,2m+1}^*$ are combined into a single vector as follows:

$$y_k = \begin{bmatrix} y_{k,2m} \\ y_{k,2m+1}^* \end{bmatrix} .$$

Equation (4)

Using Equations (3) and (4),

$$y_k = \begin{bmatrix} H_{eff} s_{k,2m} \\ H_{eff}^* s_{k,2m+1}^* \end{bmatrix} + \begin{bmatrix} n_{k,2m} \\ n_{k,2m+1}^* \end{bmatrix} .$$

Equation (5)

In the vectors $s_{k,2m}$ and $s_{k,2m+1}^*$, any data value that appears in either of them will appear either conjugated in both or unconjugated in both. This allows writing Equation (5) as a simple matrix form, as illustrated by the following specific example.

Consider the case of $N_{tx} = 3$ and $N_{ss} = 2$, (i.e., two (2) spatial streams are generated from input data by the spatial parser 106 and three data streams are generated from the spatial processing unit 120 at the transmitter 100). One of the three data streams is created from the modified replica of one data stream of the spatial parser 106 for transmit diversity as shown below.

From Table 1, for the case of $N_{tx} = 3$ and $Nss = 2$, the following can be seen:

$$s_{k,1,2m} = d_{k,1,2m} ,$$

$$s_{k,2,2m} = -d_{k,1,2m+1}^* ,$$

and

$$s_{k,3,2m} = d_{k,2,2m}.$$

so that

$$s_{k,2m} = \begin{bmatrix} d_{k,1,2m} \\ -d_{k,1,2m+1}^{*} \\ d_{k,2,2m} \end{bmatrix}.$$ 

Equation (6)

Also,

$$s_{k,1,2m+1} = d_{k,1,2m+1};$$

$$s_{k,2,2m+1} = d_{k,1,2m}^{*};$$

and

$$s_{k,3,2m+1} = d_{k,2,2m+1}.$$

so that

$$s_{k,2m+1} = \begin{bmatrix} d_{k,1,2m+1} \\ d_{k,1,2m}^{*} \\ d_{k,2,2m+1} \end{bmatrix};$$

Equation (7)

and

$$s_{k,2m+1}^{*} = \begin{bmatrix} d_{k,1,2m+1}^{*} \\ d_{k,1,2m} \\ d_{k,2,2m+1}^{*} \end{bmatrix}.$$

Equation (8)

Using Equations (6) and (8), Equation (5) can be re-written as a standard matrix equation involving the four data values $d_{k,1,2m}$, $d_{k,1,2m+1}^{*}$, $d_{k,2,2m}$, $d_{k,2,2m+1}^{*}$ as follows (the asterisks mean conjugation, not Hermitian conjugation).

$$y_k = \begin{bmatrix} H_{eff}(:,1) & -H_{eff}(:,2) & H_{eff}(:,3) & 0 \\ H_{eff}^*(:,2) & H_{eff}^*(:,1) & 0 & H_{eff}^*(:,3) \end{bmatrix} \begin{bmatrix} d_{k,1,2m} \\ d_{k,1,2m+1}^* \\ d_{k,2,2m} \\ d_{k,2,2m+1}^* \end{bmatrix} + \begin{bmatrix} n_{k,2m} \\ n_{k,2m+1}^* \end{bmatrix} .$$

$$\text{Equation (9)}$$

This is now in a standard MIMO form, but with a channel matrix which is a composite of the various columns of $H_{eff}$. The receiver 200 demodulates the data vector $d$:

$$d = \begin{bmatrix} d_{k,1,2m} \\ d_{k,1,2m+1}^* \\ d_{k,2,2m} \\ d_{k,2,2m+1}^* \end{bmatrix} .$$

$$\text{Equation (10)}$$

An MMSE demodulator may be used for the data vector in Equation (10). Let the channel matrix in Equation (9) be denoted as follows:

$$\tilde{H} = \begin{bmatrix} H_{eff}(:,1) & -H_{eff}(:,2) & H_{eff}(:,3) & 0 \\ H_{eff}^*(:,2) & H_{eff}^*(:,1) & 0 & H_{eff}^*(:,3) \end{bmatrix} .$$

$$\text{Equation (11)}$$

An MMSE solution is as follows (dropping the index k and using the symbol '+' for Hermitian conjugate):

$$\hat{d} = \left( \frac{1}{\sigma_d^2} I + \frac{1}{\sigma_n^2} \tilde{H}^+ \tilde{H} \right)^{-1} \tilde{H}^+ \frac{1}{\sigma_n^2} y \; ;$$

$$\text{Equation (12)}$$

or, equivalently,

$$\hat{d} = \left( \frac{\sigma_n^2}{\sigma_d^2} I + \tilde{H}^+ \tilde{H} \right)^{-1} \tilde{H}^+ y .$$

$$\text{Equation (13)}$$

Equation (9) can be written as follows:

$$y = \tilde{H} d + n .$$

$$\text{Equation (14)}$$

Substituting Equation (14) into Equation (12) yields:

$$\hat{d} = \left( \frac{\sigma_n^2}{\sigma_d^2} I + \tilde{H}^+ \tilde{H} \right)^{-1} \tilde{H}^+ \tilde{H} d + \left( \frac{\sigma_n^2}{\sigma_d^2} I + \tilde{H}^+ \tilde{H} \right)^{-1} \tilde{H}^+ n$$

Equation (15)

Using Equation (11), the correlation matrix $\tilde{H}^+ \tilde{H}$ becomes as follows:

$$\tilde{H}^+ \tilde{H} = \begin{bmatrix} H_{eff}^+(:,1) & H_{eff}^T(:,2) \\ -H_{eff}^+(:,2) & H_{eff}^T(:,1) \\ H_{eff}^+(:,3) & 0 \\ 0 & H_{eff}^T(:,3) \end{bmatrix} \begin{bmatrix} H_{eff}(:,1) & -H_{eff}(:,2) & H_{eff}(:,3) & 0 \\ H_{eff}^*(:,2) & H_{eff}^*(:,1) & 0 & H_{eff}^*(:,3) \end{bmatrix}$$

$$\tilde{H}^+ \tilde{H} = \begin{bmatrix} \|H_{eff}(:,1)\|^2 + \|H_{eff}(:,2)\|^2 & 0 & H_{eff}^+(:,1)H_{eff}(:,3) & H_{eff}^+(:,3)H_{eff}(:,2) \\ 0 & \|H_{eff}(:,1)\|^2 + \|H_{eff}(:,2)\|^2 & -H_{eff}^+(:,2)H_{eff}(:,3) & H_{eff}^+(:,3)H_{eff}(:,1) \\ H_{eff}^+(:,3)H_{eff}(:,1) & -H_{eff}^+(:,3)H_{eff}(:,2) & \|H_{eff}(:,3)\|^2 & 0 \\ H_{eff}^+(:,2)H_{eff}(:,3) & H_{eff}^+(:,1)H_{eff}(:,3) & 0 & \|H_{eff}(:,3)\|^2 \end{bmatrix}$$

Equation (16)

The effective SNR for the $k^{th}$ data stream in Equation (9), after MMSE receiver processing, is known to be:

$$SNR_k = \frac{1}{\left( I + \rho \tilde{H}^+ \tilde{H} \right)^{-1}_{kk}} - 1$$

Equation (17)

where

$$\rho = \frac{\sigma_d^2}{\sigma_n^2}.$$

For high SNR, Equation (17) becomes:

$$SNR_k \approx \frac{\rho}{\left( \tilde{H}^+ \tilde{H} \right)^{-1}_{kk}}$$

Equation (18)

The matrix $\tilde{H}^+ \tilde{H}$ has the form:

$$\tilde{H}^+\,\tilde{H} = \begin{bmatrix} x & 0 & a & b \\ 0 & x & -b^* & a^* \\ a^* & -b & z & 0 \\ b^* & a & 0 & z \end{bmatrix}.$$

Equation (19)

The definitions of the parameters in Equation (19) are easily found from the expression for $\tilde{H}^+\,\tilde{H}$. Using the general formula for the inverse of a matrix as follows:

$$A^{-1} = \frac{cof^{T}(A)}{\det(A)};$$

Equation (20)

it can be shown that the diagonal elements of $(\tilde{H}^+\,\tilde{H})^{-1}$ are given by:

$$\left(\tilde{H}^+\,\tilde{H}\right)^{-1}_{11} = \frac{z\left(x\,z - |b|^2 - |a|^2\right)}{\det(\tilde{H}^+\,\tilde{H})};$$

Equation (21)

$$\left(\tilde{H}^+\,\tilde{H}\right)^{-1}_{22} = \frac{z\left(x\,z - |b|^2 - |a|^2\right)}{\det(\tilde{H}^+\,\tilde{H})};$$

Equation (22)

$$\left(\tilde{H}^+\,\tilde{H}\right)^{-1}_{33} = \frac{x\left(x\,z - |b|^2 - |a|^2\right)}{\det(\tilde{H}^+\,\tilde{H})}\ ;\text{ and}$$

Equation (23)

$$\left(\tilde{H}^+\,\tilde{H}\right)^{-1}_{44} = \frac{x\left(x\,z - |b|^2 - |a|^2\right)}{\det(\tilde{H}^+\,\tilde{H})}.$$

Equation (24)

Using Equation (18), SNRs for each data streams are obtained as follows:

$$SNR_1 = \rho\,\frac{\det(\tilde{H}^+\,\tilde{H})}{z\left(x\,z - |b|^2 - |a|^2\right)};$$

Equation (25)

$$SNR_2 = \rho\,\frac{\det(\tilde{H}^+\,\tilde{H})}{z\left(x\,z - |b|^2 - |a|^2\right)};$$

Equation (26)

$$SNR_3 = \rho \frac{\det(\tilde{H}^+ \tilde{H})}{x\left(xz - |b|^2 - |a|^2\right)} \; ; \text{ and}$$

<div align="right">Equation (27)</div>

$$SNR_4 = \rho \frac{\det(\tilde{H}^+ \tilde{H})}{x\left(xz - |b|^2 - |a|^2\right)} .$$

<div align="right">Equation (28)</div>

For any above channel realization, the first two components of *d* (the ones which have the STBC code applied to them) have the same SNR, and the other two have also equal SNR. The second one is generally smaller than the first one. The ratio of the SNRs for the coded to the uncoded components of *d* is as follows:

$$\frac{SNR_{1,2}}{SNR_{3,4}} = \frac{x}{z} = \frac{\left\| H_{eff}(:,1)\right\|^2 + \left\| H_{eff}(:,2)\right\|^2}{\left\| H_{eff}(:,3)\right\|^2} .$$

<div align="right">Equation (29)</div>

Assuming that the three columns of $H_{eff}$ have similar properties, the SNR will be about 3 dB higher on average for the STBC coded symbols.
In implementing STBC, a pair of subsequent symbols may be transmitted via a same frequency or different frequencies. For evaluation, the simplest case of $N_{tx}=2$ and $N_{ss}=1$ is considered herein supposing that there is only one receive antenna at the receiver. The effective channel matrix is represented as a 1x2 matrix as follows:

$$H_{eff} = \begin{bmatrix} h_1 & h_2 \end{bmatrix},$$

<div align="right">Equation (30)</div>

and the data vector becomes as follows:

$$d = \begin{bmatrix} d_{k,1,2m} \\ d^*_{k,1,2m+1} \end{bmatrix} .$$

<div align="right">Equation (31)</div>

When the same frequency is used for the successive symbols, $H_{eff}$ is the same for both symbols and Equation (5) becomes as follows:

$$y_k = \begin{bmatrix} h_1 & -h_2 \\ h_2^* & h_1^* \end{bmatrix} \begin{bmatrix} d_{k,1,2m} \\ d^*_{k,1,2m+1} \end{bmatrix} + \begin{bmatrix} n_{k,2m} \\ n^*_{k,2m+1} \end{bmatrix} .$$

<div align="right">Equation (32)</div>

If a zero forcing receiver is used, the first step is to multiply $y_k$ by the Hermitian conjugate of the channel matrix:

$$\tilde{H} = \begin{bmatrix} h_1 & -h_2 \\ h_2^* & h_1^* \end{bmatrix};$$

to get

$$\tilde{H}^+ y_k = \begin{bmatrix} h_1^* & h_2 \\ -h_2^* & h_1 \end{bmatrix} \begin{bmatrix} h_1 & -h_2 \\ h_2^* & h_1^* \end{bmatrix} \begin{bmatrix} d_{k,1,2m} \\ d_{k,1,2m+1}^* \end{bmatrix} + \begin{bmatrix} h_1^* & h_2 \\ -h_2^* & h_1 \end{bmatrix} \begin{bmatrix} n_{k,2m} \\ n_{k,2m+1}^* \end{bmatrix}$$

$$= \begin{bmatrix} |h_1|^2 + |h_2|^2 & 0 \\ 0 & |h_1|^2 + |h_2|^2 \end{bmatrix} \begin{bmatrix} d_{k,1,2m} \\ d_{k,1,2m+1}^* \end{bmatrix} + \begin{bmatrix} h_1^* & h_2 \\ -h_2^* & h_1 \end{bmatrix} \begin{bmatrix} n_{k,2m} \\ n_{k,2m+1}^* \end{bmatrix}.$$

Equation (33)

The diagonal matrix elements $|h_1|^2 + |h_2|^2$ in the signal part represent the diversity of order 2 that is gained by the STBC code.

When different frequencies are used for the successive symbols, the effective channels for the two symbols are as follows:

$H_{eff} = [h_1 \; h_2]$ for the first symbol; and
$H_{eff} = [g_1 \; g_2]$ for the second symbol.

In this case the modified Equation (5) becomes as follows:

$$y_k = \begin{bmatrix} h_1 & -h_2 \\ g_2^* & g_1^* \end{bmatrix} \begin{bmatrix} d_{k,1,2m} \\ d_{k,1,2m+1}^* \end{bmatrix} + \begin{bmatrix} n_{k,2m} \\ n_{k,2m+1}^* \end{bmatrix};$$

Equation (34)

and the followings are obtained:

$$\tilde{H} = \begin{bmatrix} h_1 & -h_2 \\ g_2^* & g_1^* \end{bmatrix};$$

Equation (35)

and

$$\tilde{H}^+ y_k = \begin{bmatrix} h_1^* & g_2 \\ -h_2^* & g_1 \end{bmatrix} \begin{bmatrix} h_1 & -h_2 \\ g_2^* & g_1^* \end{bmatrix} \begin{bmatrix} d_{k,1,2m} \\ d_{k,1,2m+1}^* \end{bmatrix} + \begin{bmatrix} h_1^* & g_2 \\ -h_2^* & g_1 \end{bmatrix} \begin{bmatrix} n_{k,2m} \\ n_{k,2m+1}^* \end{bmatrix}$$

$$= \begin{bmatrix} |h_1|^2 + |g_2|^2 & -h_1^* h_2 + g_1^* g_2 \\ -h_2^* h_1 + g_2^* g_1 & |h_2|^2 + |g_2|^2 \end{bmatrix} \begin{bmatrix} d_{k,1,2m} \\ d_{k,1,2m+1}^* \end{bmatrix} + \begin{bmatrix} h_1^* & g_2 \\ -h_2^* & g_1 \end{bmatrix} \begin{bmatrix} n_{k,2m} \\ n_{k,2m+1}^* \end{bmatrix}.$$

Equation (36)

The diagonal matrix elements $|h_1|^2 + |g_2|^2$ in the signal part represent the diversity of order 2 that is gained by the STBC code. In this case, the diagonal elements still represent diversity of order 2. However, the off-diagonal elements contribute interference (i.e., non-orthogonality).

For the 2×1 case of Table 1, Equation (5) becomes as follows:

$$y_k = \begin{bmatrix} h_1 & -h_2 \\ h_2^* & h_1^* \end{bmatrix} \begin{bmatrix} d_{k,1,2m} \\ d_{k,1,2m+1}^* \end{bmatrix} + \begin{bmatrix} n_{k,2m} \\ n_{k,2m+1}^* \end{bmatrix} ; \qquad \text{Equation (37)}$$

wherein

$$\tilde{H} = \begin{bmatrix} h_1 & -h_2 \\ h_2^* & h_1^* \end{bmatrix} ; \qquad \text{Equation (38)}$$

and

$$d = \begin{bmatrix} d_{k,1,2m} \\ d_{k,1,2m+1}^* \end{bmatrix} . \qquad \text{Equation (39)}$$

The MMSE estimator of $d$ in this case is as follows:

$$\hat{d} = \rho \tilde{H}^+ \left( \rho \tilde{H} \tilde{H}^+ + I \right)^{-1} y_k . \qquad \text{Equation (40)}$$

$$\tilde{H} \tilde{H}^+ = \begin{bmatrix} h_1 & -h_2 \\ h_2^* & h_1^* \end{bmatrix} \begin{bmatrix} h_1^* & h_2 \\ -h_2^* & h_1 \end{bmatrix} = \begin{bmatrix} |h_1|^2 + |h_2|^2 & 0 \\ 0 & |h_1|^2 + |h_2|^2 \end{bmatrix} . \qquad \text{Equation (41)}$$

Equation (40) becomes:

$$\hat{d} = \rho \begin{bmatrix} h_1^* & h_2 \\ -h_2^* & h_1 \end{bmatrix} \begin{bmatrix} \rho\left( |h_1|^2 + |h_2|^2 \right) + 1 & 0 \\ 0 & \rho\left( |h_1|^2 + |h_2|^2 \right) + 1 \end{bmatrix}^{-1} y_k ; \qquad \text{Equation (42)}$$

or,

$$\begin{bmatrix} \hat{d}_{2m} \\ \hat{d}_{2m+1}^* \end{bmatrix} = \frac{\rho}{\rho\left( |h_1|^2 + |h_2|^2 \right) + 1} \begin{bmatrix} h_1^* & h_2 \\ -h_2^* & h_1 \end{bmatrix} \begin{bmatrix} y_{2m} \\ y_{2m+1}^* \end{bmatrix} . \qquad \text{Equation (43)}$$

Alternatively, the MMSE estimates of $d_{2m}$ and $d_{2m+1}$ may be found using just $y_{2m}$ and then $y_{2m+1}$ and then adding them up. Applying this scheme for the first symbol:

$$y_{2m} = \begin{bmatrix} h_1 & h_2 \end{bmatrix} \begin{bmatrix} d_{2m} \\ -d_{2m+1}^* \end{bmatrix} + n_{2m} \qquad \text{Equation (44)}$$

and the MMSE estimate of the data vector from the first symbol is:

$$\begin{bmatrix} \hat{d}_{2m} \\ -\hat{d}_{2m+1}^* \end{bmatrix} = \rho \begin{bmatrix} h_1^* \\ h_2^* \end{bmatrix} \left( \rho \begin{bmatrix} h_1 & h_2 \end{bmatrix} \begin{bmatrix} h_1^* \\ h_2^* \end{bmatrix} + 1 \right)^{-1} y_{2m} \qquad \text{Equation (45)}$$

or,

$$\begin{bmatrix} \hat{d}_{2m} \\ -\hat{d}_{2m+1}^* \end{bmatrix} = \frac{\rho}{\rho \left( |h_1|^2 + |h_2|^2 \right) + 1} \begin{bmatrix} h_1^* \\ h_2^* \end{bmatrix} y_{2m} \qquad \text{Equation (46)}$$

Applying this scheme for the second symbol:

$$y_{2m+1} = \begin{bmatrix} h_1 & h_2 \end{bmatrix} \begin{bmatrix} d_{2m+1} \\ d_{2m}^* \end{bmatrix} + n_{2m+1} \qquad \text{Equation (47)}$$

and the MMSE estimate of the data vector from the second symbol is:

$$\begin{bmatrix} \hat{d}_{2m+1} \\ \hat{d}_{2m}^* \end{bmatrix} = \rho \begin{bmatrix} h_1^* \\ h_2^* \end{bmatrix} \left( \rho \begin{bmatrix} h_1 & h_2 \end{bmatrix} \begin{bmatrix} h_1^* \\ h_2^* \end{bmatrix} + 1 \right)^{-1} y_{2m+1} \qquad \text{Equation (48)}$$

or,

$$\begin{bmatrix} \hat{d}_{2m+1} \\ \hat{d}_{2m}^* \end{bmatrix} = \frac{\rho}{\rho \left( |h_1|^2 + |h_2|^2 \right) + 1} \begin{bmatrix} h_1^* \\ h_2^* \end{bmatrix} y_{2m+1} \qquad \text{Equation (49)}$$

Using Equations (47) and (49), the two estimates of $d_{2m}$ are added up as follows:

$$\hat{d}_{2m} = \frac{\rho}{\rho \left( |h_1|^2 + |h_2|^2 \right) + 1} \begin{bmatrix} h_1^* y_{2m} + h_2 y_{2m+1}^* \end{bmatrix} \qquad \text{Equation (50)}$$

The result is same to the result obtained in Equation (43). Doing the sum for the estimate of $d_{2m+1}$ will also result in the same as that from Equation (43). Thus, in the simple 2×1 Alamouti scheme, the two decoding techniques are identical. However, it may not be same in the 3×2 case in Table 1.

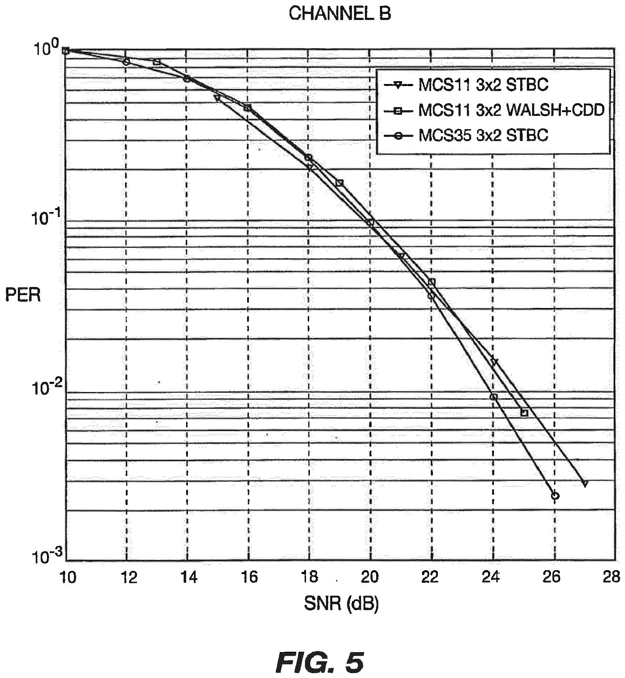

Figures 4 and 5 show simulation results for an IEEE 802.11n channels E and B using a 3×2 antenna configuration and a linear MMSE (LMMSE) receiver. The simulation results show that the case using an unequal modulation scheme of 64 QAM and QPSK has about 1.5 dB (0.8 dB) better in terms of packet error rate (PER) than the case using equal modulation scheme of 16 QAM and 16 QAM for channel E (channel B).

The transmitter and the receiver may be a wireless transmit/receive unit (WTRU) or a base station. The terminology "WTRU" includes but is not limited to a user equipment (UE), a mobile station, a fixed or mobile subscriber unit, a pager, a cellular telephone, a personal digital assistant (PDA), a computer, or any other type of user device capable of operating in a wireless environment. The terminology "base station" includes but is not limited to a Node-B, a site controller, an access point (AP), or any other type of interfacing device capable of operating in a wireless environment.

Embodiments.

1. A method for implementing spatial data processing with unequal MCSs in a wireless communication system including a transmitter and a receiver.

2. The method of embodiment 1 comprising the step of generating a plurality of data streams from at least one input data.

3. The method of embodiment 2 comprising the step of performing a spatial processing on at least one of the data streams to generate a plurality of spatial streams, an MCS for each data stream being selected independently.

4. The method of embodiment 3 comprising the step of transmitting the spatial streams via multiple transmit antennas.

5. The method as in any of the embodiments 3-4, wherein the spatial processing is performed only a portion of the data streams.

6. The method as in any of the embodiments 3-5, wherein an MCS for a data stream on which a spatial processing is performed is different from an MCS for a data stream on which a spatial processing is not performed.

7. The method as in any of the embodiments 3-6, wherein the spatial processing is STBC performed on at least one of the data streams.

8. The method of embodiment 7, wherein a pair of symbols for the STBC on the data stream are mapped to a same frequency.

9. The method of embodiment 7, wherein a pair of symbols for the STBC on the data stream are mapped to different frequencies.

10. The method as in any of the embodiments 3-9, wherein the spatial processing is at least one of STBC, SFBC, quasi-orthogonal Alamouti coding and time reversed space time block coding is performed on at least one of the data streams.

11. The method as in any of the embodiments 3-10, wherein linear spatial processing is performed on the data streams.

12. The method of embodiment 11, wherein CDD is performed on the spatial streams.

13. The method as in any of the embodiments 11-12, wherein an antennal mapping matrix is multiplied to the spatial streams.

14. The method of embodiment 13, wherein the antenna mapping matrix is an identity matrix.

15. The method of embodiment 13, wherein the antenna mapping matrix is for spatial spreading.

16. The method of embodiment 13, wherein the antenna mapping matrix is a channel-specific steering matrix.

17. The method of embodiment 16, wherein the antenna mapping matrix includes a set of channel eigenvectors.

18. The method as in any of the embodiments 3-17, wherein the MCS for each data stream is determined based on a signal-to-noise ratio of each spatial stream associated with the data stream.

19. The method as in any of the embodiments 4-18, further comprising the step of receiving the spatial streams with at least one receive antenna.

20. The method of embodiment 19 comprising the step of performing channel estimation to generate a channel matrix.

21. The method of embodiment 20 comprising the step of decoding the received spatial streams using the channel matrix to recover the input data.

22. The method of embodiment 21, wherein MMSE decoding is used for decoding the received data streams.

23. The method of embodiment 21, wherein ZF decoding is used for decoding the received data streams.

24. The method as in any of the embodiments 1-23, wherein the wireless communication system is an OFDM system.

25. The method as in any of the embodiments 1-23, wherein the wireless communication system is one of a MS-CDMA system and a CDMA system.

26. A transmitter for implementing spatial data processing with unequal MCSs.

27. The transmitter of embodiment 26 comprising a spatial processor for performing spatial processing on at least one of a plurality of data streams, an MCS for each data stream being selected independently.

28. The transmitter of embodiment 27 comprising a plurality of transmit antennas for transmitting the data streams.

29. The transmitter as in any of the embodiments 27-28, wherein the spatial processor is configured to perform spatial processing only a portion of the data streams.

30. The transmitter as in any of the embodiments 27-29, wherein an MCS for a data stream on which a spatial processing is performed is different from an MCS for a data stream on which a spatial processing is not performed.

31. The transmitter as in any of the embodiments 27-30, wherein the spatial processor is configured to perform STBC on at least one of the data streams.

32. The transmitter of embodiment 31, wherein the spatial processor is configured to map a pair of symbols for the STBC on the data stream to a same frequency.

33. The transmitter of embodiment 31, wherein the spatial processor is configured to map a pair of symbols for the STBC on the data stream to different frequencies.

34. The transmitter as in any of the embodiments 27-33, wherein the spatial processor is configured to perform at least one of STBC, SFBC, quasi-orthogonal Alamouti coding and time reversed space time block coding on at least one of the data streams.

35. The transmitter as in any of the embodiments 27-34, wherein the spatial processor is configured to perform linear spatial processing on the data streams.

36. The transmitter of embodiment 35, wherein the spatial processor is configured to perform CDD on the spatial streams.

37. The transmitter as in any of the embodiments 35-36, wherein the spatial processor is configured to apply an antennal mapping matrix to the spatial streams.

38. The transmitter of embodiment 37, wherein the antenna mapping matrix is an identity matrix.

39. The transmitter of embodiment 37, wherein the antenna mapping matrix is for spatial spreading.

40. The transmitter of embodiment 37, wherein the antenna mapping matrix is a channel-specific steering matrix.

41. The transmitter of embodiment 40, wherein the antenna mapping matrix includes a set of channel eigenvectors.

42. The transmitter as in any of the embodiments 27-41, wherein the MCS for each data stream is determined based on a signal-to-noise ratio of each spatial stream associated with the data stream.

43. A receiver for implementing spatial data processing with unequal MCSs.

44. The receiver of embodiment 43 comprising at least one receive antenna for receiving a plurality of spatial streams, an MCS for each data stream mapped to the spatial streams being selected independently at a transmitter.

45. The receiver of embodiment 44 comprising a channel estimator for performing channel estimation to generate a channel matrix.

46. The receiver of embodiment 45 comprising a spatial decoder for decoding the received spatial streams using the channel matrix.

47. The receiver of embodiment 46, wherein the spatial decoder is configured to perform MMSE decoding for decoding the received spatial streams.

48. The receiver of embodiment 46, wherein the spatial decoder is configured to perform ZF decoding for decoding the received spatial streams.

49. In a wireless communication system including a transmitter and a receiver, a method for implementing spatial data processing with unequal modulation and coding schemes (MCSs), the method comprising:

> generating a plurality of data streams from at least one input data;
> performing a spatial processing on at least one of the data streams to generate a plurality of spatial streams, an MCS for each data stream being selected independently; and
> transmitting the spatial streams via multiple transmit antennas.

50. The method of embodiment 49 wherein the spatial processing is performed only a portion of the data streams.

51. The method of embodiment 50 wherein an MCS for a data stream on which a spatial processing is performed is different from an MCS for a data stream on which a spatial processing is not performed.

52. The method of embodiment 49 wherein the spatial processing is space time block coding (STBC) performed on at least one of the data streams.

53. The method of embodiment 52 wherein a pair of symbols for the STBC on the data stream are mapped to a same frequency.

54. The method of embodiment 52 wherein a pair of symbols for the STBC on the data stream are mapped to different frequencies.

55. The method of embodiment 49 wherein the spatial processing is at least one of space time block coding (STBC), space frequency block coding (SFBC), quasi-orthogonal Alamouti coding and time reversed space time block coding is performed on at least one of the data streams.

56. The method of embodiment 49 wherein linear spatial processing is performed on the data streams.

57. The method of embodiment 56 wherein cyclic delay diversity (CDD) is performed on the spatial streams.

58. The method of embodiment 56 wherein an antennal mapping matrix is multiplied to the spatial streams.

59. The method of embodiment 58 wherein the antenna mapping matrix is an identity matrix.

60. The method of embodiment 58 wherein the antenna mapping matrix is for spatial spreading.

61. The method of embodiment 58 wherein the antenna mapping matrix is a channel-specific steering matrix.

62. The method of embodiment 61 wherein the antenna mapping matrix includes a set of channel eigenvectors.

63. The method of embodiment 49 wherein the MCS for each data stream is determined based on a signal-to-noise ratio of each spatial stream associated with the data stream.

64. The method of embodiment 49 further comprising:

receiving the spatial streams with at least one receive antenna;
performing channel estimation to generate a channel matrix; and
decoding the received spatial streams using the channel matrix to recover the input data.

65. The method of embodiment 64 wherein minimum mean square error (MMSE) decoding is used for decoding the received data streams.

66. The method of embodiment 64 wherein zero forcing (ZF) decoding is used for decoding the received data streams.

67. The method of embodiment 49 wherein the wireless communication system is an orthogonal frequency division multiplexing (OFDM) system.

68. The method of embodiment 49 wherein the wireless communication system is one of a multi-carrier code division multiple access (MS-CDMA) system and a CDMA system.

69. A transmitter for implementing spatial data processing with unequal modulation and coding schemes (MCSs), the transmitter comprising:

a spatial processor for performing spatial processing on at least one of a plurality of data streams, an MCS for each data stream being selected independently; and
a plurality of transmit antennas for transmitting the data streams.

70. The transmitter of embodiment 69 wherein the spatial processor is configured to perform spatial processing only a portion of the data streams.

71. The transmitter of embodiment 70 wherein an MCS for a data stream on which a spatial processing is performed is different from an MCS for a data stream on which a spatial processing is not performed.

72. The transmitter of embodiment 69 wherein the spatial processor is configured to perform space time block coding (STBC) on at least one of the data streams.

73. The transmitter of embodiment 70 wherein the spatial processor is configured to map a pair of symbols for the STBC on the data stream to a same frequency.

74. The transmitter of embodiment 70 wherein the spatial processor is configured to map a pair of symbols for the STBC on the data stream to different frequencies.

75. The transmitter of embodiment 69 wherein the spatial processor is configured to perform at least one of space time block coding (STBC), space frequency block coding (SFBC), quasi-orthogonal Alamouti coding and time reversed space time block coding on at least one of the data streams.

76. The transmitter of embodiment 69 wherein the spatial processor is configured to perform linear spatial processing on the data streams.

77. The transmitter of embodiment 76 wherein the spatial processor is configured to perform cyclic delay diversity (CDD) on the spatial streams.

78. The transmitter of embodiment 76 wherein the spatial processor is configured to apply an antennal mapping matrix to the spatial streams.

79. The transmitter of embodiment 78 wherein the antenna mapping matrix is an identity matrix.

80. The transmitter of embodiment 78 wherein the antenna mapping matrix is for spatial spreading.

81. The transmitter of embodiment 78 wherein the antenna mapping matrix is a channel-specific steering matrix.

82. The transmitter of embodiment 81 wherein the antenna mapping matrix includes a set of channel eigenvectors.

83. The transmitter of embodiment 79 wherein the MCS for each data stream is determined based on a signal-to-noise ratio of each spatial stream associated with the data stream.

84. A receiver for implementing spatial data processing with unequal modulation and coding schemes (MCSs), the receiver comprising:

at least one receive antenna for receiving a plurality of spatial streams, an MCS for each data stream mapped to the spatial streams being selected independently at a transmitter;
a channel estimator for performing channel estimation to generate a channel matrix; and

a spatial decoder for decoding the received spatial streams using the channel matrix.

85. The receiver of embodiment 84 wherein the spatial decoder is configured to perform minimum mean square error (MMSE) decoding for decoding the received spatial streams.

86. The receiver of embodiment 84 wherein the spatial decoder is configured to perform zero forcing (ZF) decoding for decoding the received spatial streams.

Although the features and elements of the present invention are described in the preferred embodiments in particular combinations, each feature or element can be used alone without the other features and elements of the preferred embodiments or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

**Claims**

1. A method for use in an Institute of Electrical and Electronics Engineers (IEEE) 802.11 transmitter, the method comprising:

generating a first spatial stream and a second spatial stream;
on a condition that the first spatial stream and the second spatial stream are both destined for a first station (STA):

processing each of the first spatial stream and the second spatial stream to generate two or more space-time streams,
mapping the two or more space-time streams associated with the first STA to a plurality of data streams, and
transmitting the plurality of data streams via a plurality of antennas to the first STA;

on a condition that the first spatial stream is destined for a first STA and the second spatial stream is destined for a second STA:

processing the first spatial stream to generate a first set of two or more space-time streams and processing the second spatial stream to generate a second set of two or more space-time streams,
mapping the first set of space-time streams and the second set of space-time streams to a plurality of data streams, and
transmitting the plurality of data streams via a plurality of antennas to the first STA and the second STA.

2. The method of claim 1, wherein the space-time streams are generated by using one or more of a space time block coding (STBC) processing or a cyclic delay diversity (CDD) processing.

3. The method of claim 1, comprising:

receiving a V matrix, wherein the V matrix is a unitary matrix derived from singular value decomposition (SVD) of an estimated channel matrix, and wherein the V matrix is associated with a STA and a sub carrier.

4. The method of claim 3, wherein the processing of the spatial streams or the mapping of the space-time streams is performed based on the received V matrix.

5. The method of claim 3, wherein the V matrix is a feedback matrix.

6. The method of claim 5, wherein the feedback matrix is associated with a channel state information (CSI).

7. An Institute of Electrical and Electronics Engineers (IEEE) 802.11 transmitter comprising:

a processor and a memory having stored therein executable instructions for execution by the processor to:

generate a first spatial stream and a second spatial stream;
on a condition that the first spatial stream and the second spatial stream are both destined for a first station (STA):

process each of the first spatial stream and the second spatial stream to generate two or more space-time streams,
map the two or more space-time streams associated with the first STA to a plurality of data streams, and
transmit the plurality of data streams via a plurality of antennas to the first STA;

on a condition that the first spatial stream is destined for a first STA and the second spatial stream is destined for a second STA:

process the first spatial stream to generate a first set of two or more space-time streams and process the second spatial stream to generate a second set of two or more space-time streams,
map the first set of space-time streams and the second set of space-time streams to a plurality of data streams, and
transmit the data streams via a plurality of antennas to the first STA and the second STA.

8. The IEEE 802.11 transmitter of claim 7, wherein the space-time streams are generated by using one or more of a space time block coding (STBC) processing or a cyclic delay diversity (CDD) processing.

9. The IEEE 802.11 transmitter of claim 7, further comprising a receiver configured to receive a V matrix, wherein the V matrix is a unitary matrix derived from singular value decomposition (SVD) of an estimated channel matrix, and wherein the V matrix is associated with a STA and a sub carrier.

10. The IEEE 802.11 transmitter of claim 9, wherein the processing of the spatial streams or the mapping of the space-time streams is performed based on the received V matrix.

11. The IEEE 802.11 transmitter of claim 9, wherein the V matrix is a feedback matrix.

12. The IEEE 802.11 transmitter of claim 11, wherein the feedback matrix is associated with a channel state information (CSI).

**FIG. 1**

EP 3 506 539 A1

FIG. 2

**FIG. 3**

CHANNEL E

**FIG. 4**

FIG. 5

**DECLARATION**

which under Rule 63 of the European Patent Convention shall be considered, for the purposes of subsequent proceedings, as the European search report

Application Number

EP 18 18 8132

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>H04L1/00<br>H04L1/06<br>H04B7/06 |

The claims filed contain subject-matter which extends beyond the content of the parent application EP07717949 as filed, contrary to Article 76(1) EPC, at least for the following reasons:

.
The subject matter of claim 1 defines a method for processing two spatial streams, depending on whether these streams are destined for the same station or for two different stations. The search division cannot see that the parent application discloses a method comprising processing a first and second spatial stream according to the claimed processing steps depending on whether the first and second spatial stream are destined for a single station or for two different stations. Such a flexible and adaptive method has not been disclosed in the parent application as filed. The division does not see that for example para. [0020] provides a basis for this subject-matter.

.
When being compared to original claim 1 of the parent application, the feature of selecting the MCS for the plurality of spatial streams independently is omitted in present claim 1. The search division does not see any basis in the parent application for this omission, in particular in view of the problem and the solution as formulated in para. [0006]-[0008] and [0016] of the parent application.

.
The same objection(s) as set out above for claim 1 apply mutatis mutandis to the wording of corresponding claim 7.

-/--

| Place of search | Date | Examiner |
|---|---|---|
| Munich | 23 May 2019 | Stolte, Norbert |

EPO FORM 1504 (P04F37)

Europäisches
Patentamt

European
Patent Office

Office européen
des brevets

**DECLARATION**

Application Number

which under Rule 63 of the European Patent Convention EP 18 18 8132
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

- Due to their dependency, the objections raised above equally apply to the dependent claims.

- In view of the above indicated objections, the search division is not in a position to establish which of the plurality of amendments made to the claims are allowable and which not, and therefore which combination of features can be prosecuted within the present application. It is not possible to elaborate which amendments will be made by the applicant either by addition or by deletion of features in order arrive at subject-matter which meets the requirements of Article 76(1) EPC. As a result, the combination of features to be searched cannot be identified and hence, a meaningful search cannot be carried out.

The applicant's attention is drawn to the fact that a search may be carried out during examination following a declaration of no search under Rule 63 EPC, should the problems which led to the declaration being issued be overcome (see EPC Guideline C-IV, 7.2).

2

EPO FORM 1504 (P04F37)

| Place of search | Date | Examiner |
|---|---|---|
| Munich | 23 May 2019 | Stolte, Norbert |